# EUROPÄISCHE PATENTSCHRIFT

(11) **EP 3 047 083 B1**
(45) Veröffentlichungstag und Bekanntmachung des Hinweises auf die Patenterteilung: **15.02.2017**
(21) Anmeldenummer: 14733138.3
(22) Anmeldetag: 20.06.2014
(51) Int. Cl.: E04G 21/28, F03D 1/00, E04G 21/24

(54) **VARIABLES SCHUTZDACH**
VARIABLE PROTECTIVE ROOF
TOIT DE PROTECTION VARIABLE

(30) Priorität: 20.09.2013 EP 13185340
(43) Veröffentlichungstag der Anmeldung: 27.07.2016
(73) Patentinhaber: Nordex Energy GmbH, 22419 Hamburg (DE)
(72) Erfinder: NOACK, Mario, 17493 Greifswald (DE)
(74) Vertreter: Garrels, Sabine
(86) Internationale Anmeldenummer: PCT/EP2014/063065
(87) Internationale Veröffentlichungsnummer: WO 2015/039777

(56) Entgegenhaltungen:
- EP-A1- 2 381 103
- WO-A2-2010/147459
- DE-A1- 2 751 219
- JP-A- H0 941 726

## Beschreibung

Die Erfindung betrifft ein variables Schutzdach für Türme, insbesondere für Türme von Windenergieanlagen während des Errichtungsprozesses. Das Schutzdach kann auch für andere Türme, beispielsweise zeitweise stillgelegte Schornsteine genutzt werden.

Es ist üblich, Windenergieanlagen komplett in einem Zuge zu errichten, also innerhalb kurzer Zeit (eines Tages oder weniger Tage) den Turm aufzubauen, anschließend das Maschinenhaus und den Rotor. Nachteilig hierbei ist, dass für die gesamte Dauer der Errichtung ein speziell ausgelegter Kran zur Verfügung stehen muss, welcher Lasten bis zur Nabenhöhe der Windenergieanlage, oft über 100 m hoch heben können muss. Da der komplette Aufbau des Turms einige Zeit in Anspruch nimmt und zwischenzeitlich noch andere Arbeiten ausgeführt werden müssen, verursacht diese Vorgehensweise, abhängig vom Aufstellort und Anlagentyp, hohe Kosten für die Bereitstellung des Krans über die Dauer der Errichtung.

In EP 2 381 103 A1 wird eine Abdeckung für Turmsektionen offenbart, welche im wesentlichen kreisförmig ist und die in ihrer Querabmessung mindestens größer ist als der Innendurchmesser der Turmsektion und im wesentlichen dem äußeren Durchmesser der Turmsektion angepasst ist. Die Abdeckung besteht aus einer Vielzahl von freitragenden Plattenabschnitten, die schwenkbar miteinander verbunden sind. Dadurch kann die Abdeckung in einem gefalteten Zustand transportiert werden. Die Verbindung zwischen Turm und Abdeckung erfolgt im Innern des Turms an einer umlaufenden Kante durch Schraubzwingen, die in Abständen an Querrippen der Abdeckung angebracht werden.

WO 2009/155927 A1 beschreibt eine Plattform, insbesondere eine innere Plattform für einen rohrförmigen Turm aus Stahl für eine Windkraftanlage. Die Plattform ist aus einer Vielzahl von Bauelementen zusammengesetzt in der Art, dass in ein kreisförmiges zentrales Modul über den Umfang eine Anzahl teleskopartiger Tragbalken-Elemente eingesetzt werden, zwischen welche eine Anzahl von flächigen Bauelementen in Form von gewölbten Modulen eingesetzt werden. Die Plattform ist an unterschiedliche Durchmesser anpassbar.

WO 2010/147459 A2 offenbart ein Schutzdach für einen Turm zum Schutz vor der Witterung. Das Schutzdach ist eine mehreckige Kegeldachkonstruktion, welche mittels eines Krans im Ganzen auf den Turmabschnitt gehoben und dort von innen befestigt wird.

WO 2010/147459 A2 offenbart die Merkmale des einleitenden Teils des Anspruchs 1.

### Darstellung der Erfindung

Aufgabe der Erfindung ist es, ein Schutzdach zu entwickeln, welches eine zeitlich flexible Errichtung einer Windenergieanlage ermöglicht. Weiterhin soll das Schutzdach flexibel und leicht zu transportieren sein.

Die Aufgabe wird erfüllt durch ein Schutzdach mit den Merkmalen des Anspruches 1. Vorteilhafte Ausführungsformen bilden den Gegenstand der Unteransprüche.

Das erfindungsgemäße Schutzdach ist bestimmt für einen Turm mit einem kreisförmigen oder vieleckigen Querschnitt, insbesondere einen Turm für eine Windenergieanlage. Kreisförmige Türme können insbesondere Stahlrohrtürme oder Betonrohrtürme sein; vieleckige Türme können insbesondere aus Stahlsegmenten oder Betonsegmenten zusammengesetzte Türme sein. Das Schutzdach besteht im Wesentlichen aus einem Untergerüst und einer textilen Abdeckung. Das Untergerüst weist ein Mittelteil, mehrere an dem Mittelteil radial angeordnete Verbindungsstücke und Befestigungskrallen auf, die in oder auf den Verbindungsstücken verschiebbar gelagert sind. Entweder haben die Befestigungskrallen einen etwas kleineren Querschnitt als die Verbindungsstücke, so dass sie in diese hineingeschoben werden können, oder sie haben einen etwas größeren Querschnitt als die Verbindungsstücke und können auf diese aufgeschoben werden. Durch Verschieben der Befestigungskrallen gegenüber den Verbindungsstücken kann das Untergerüst besonders einfach an unterschiedliche Durchmesser des Turmes angepasst werden. Die Befestigungskrallen sind jeweils durch ein Abspannseil, das an dem vom Mittelteil des Untergerüstes entfernten Ende der Befestigungskrallen befestigt ist, mit einer senkrechten Stütze verbunden, die sich auf dem Mittelteil befindet. Die textile Abdeckung wird über die Abspannseile gespannt.

Das Mittelteil weist vorzugsweise eine untere und eine obere Platte auf, die in einem Abstand miteinander verbunden sind. Zwischen den beiden Platten werden die Verbindungsstücke platziert und befestigt. Die Befestigung kann mittels Schraubverbindungen erfolgen. Die Verbindung zwischen den beiden Platten kann durch eines der Verbindungsstücke erfolgen, das hierfür geeignet ausgebildet ist.

Bevorzugt sind die Verbindungsstücke schwenkbar zwischen den Platten befestigt. Dadurch kann das Untergerüst leicht an unterschiedliche Gegebenheiten des Turmes angepasst werden, beispielsweise eine andere Anzahl von Bohrlöchern in einem Turmflansch. Bei Stahlrohrtürmen dienen die Turmflansche, die sich jeweils am unteren und oberen Ende einer Turmsektion befinden, der Verbindung der Turmsektionen. Die hierzu vorgesehenen Bohrlöcher werden einfach zum Befestigen des Schutzdaches benutzt.

Bevorzugt ist auf der senkrechten Stütze, die auf der oberen Platte des Mittelteils des Untergerüstes steht, eine Blitzfangeinrichtung angebracht. Diese weist eine schirmförmige Abdeckplatte und eine Blitzfangstange auf.

Bevorzugt wird die textile Abdeckung mittig unter der schirmförmigen Abdeckplatte befestigt.

Bevorzugt weisen die Befestigungskrallen jeweils einen Krallengrundkörper auf. An dem vom Mittelteil entfernten Ende des Krallengrundkörpers ist eine nach unten gerichtete Kralle und auf der Oberseite ein Abspannprofil angeordnet. Die nach unten gerichtete Kralle dient zum Führen und Fixieren des Untergerüsts auf dem Turmflansch. Das Abspannprofil dient zum Anbringen und Spannen des Abspannseils.

Bevorzugt richtet sich die Länge der Befestigungskrallen nach dem abzudeckenden Durchmesser des Turmes und ist so bemessen, dass sie höchstens dem Radius des Turmes abzüglich des Radius' des Mittelteils entspricht. Bei maximal auf oder in die Verbindungsstücke geschobenen Befestigungskrallen wird so gerade ein Turm mit einem kleineren Durchmesser bedeckt; werden die Befestigungskrallen nicht maximal aufgeschoben oder eingeschoben, so kann ein Turm mit einem größeren Durchmesser bedeckt werden.

Bevorzugt sind die Krallen mit Haken versehen, in die ein umlaufendes Seil der textilen Abdeckung eingelegt werden kann. Eine solche Technik ist von LKW zum Befestigen von Abdeckplanen bekannt.

Bevorzugt hat die textile Abdeckung einen kegelförmigen Zuschnitt, so dass sie sich an die Schräge anschmiegt, die durch das Untergerüst und die Abspannseile gebildet wird.

Besonders bevorzugt ist die textile Abdeckung zweiteilig ausgebildet, und zwar derart, dass ein innerer oder oberer Teil der textilen Abdeckung einen kegelförmigen Zuschnitt hat und ein äußerer oder unterer Teil ringförmig ist und einen dazu passenden kegelstumpfförmigen Zuschnitt hat. Die beiden Teile der textilen Abdeckung sind so aufeinander abgestimmt, dass der obere Teil den unteren um ein Stück überlappt. Die beiden Teile sind insgesamt leichter zu transportieren und zu handhaben als eine einteilig ausgebildete Abdeckung; durch die Überlappung bietet die Abdeckung dennoch einen ausreichenden Schutz.

Durch das erfindungsgemäße Schutzdach wird eine Errichtung einer Windenergieanlage bzw. ihres Turms in mehreren Phasen ermöglicht. In der ersten Phase wird mindestens eine erste, untere Sektion des Turmes errichtet, wozu kein spezieller Kran benötigt wird. In einer zweiten Errichtungsphase werden nacheinander die weiteren Turmsektionen errichtet sowie das Maschinenhaus und der Rotor der Windenergieanlage montiert; die einzelnen Schritte können auch auf drei oder noch mehr Phasen verteilt werden. Da zwischen den einzelnen Errichtungsphasen ein zeitlicher Abstand von mehreren Monaten liegen kann, ist zum Schutz der sich bereits im Inneren der Turmsektionen befindenden technischen Einrichtungen ein Schutzdach inklusive Blitzschutzsystem erforderlich.

Ein Vorteil der Erfindung ist es, die Abhängigkeit von Spezialkränen beim Bau von Windenergieanlagen zu reduzieren. Elektrische Komponenten in den unteren Turmsektionen können teilweise schon in Betrieb genommen werden, da das Schutzdach über einen längeren Zeitraum einen Schutz vor Witterungseinflüssen und Blitzschlag bietet.

Ein weiterer Vorteil ist es, dass das Schutzdach in der Größe flexibel und wiederverwendbar ist. Für den Transport und/oder eine Lagerung ist das Schutzdach außerdem zerlegbar. Durch eine definierte Neigung des Schutzdaches wird ein Witterungsschutz gewährleistet.

Diese Vorteile führen zu einer erheblichen Kostenminimierung während der Errichtung einer Windenergieanlage.

### Ausführung der Erfindung

Die Erfindung wird anhand von Zeichnungen näher erläutert. Hierzu zeigen
Figur 1 das Untergerüst des erfindungsgemäßen Schutzdaches,
Figur 2 eine Explosionszeichnung des Untergerüstes mit schematisch dargestelltem Turmflansch,
Figur 3 in einem Ausschnitt von Figur 2 den Aufbau einer Befestigungskralle,
Figur 4 eine schematische Darstellung der Abspannung einer Befestigungskralle,
Figur 5 die Befestigung des erfindungsgemäßen Schutzdaches auf dem Turmflansch und
Figur 6 das erfindungsgemäße Schutzdach mit textiler Abdeckung.

Das Schutzdach besteht aus einem flexibel aufbaubaren Untergerüst und einer textilen Abdeckung, welche über das Untergerüst gespannt wird.

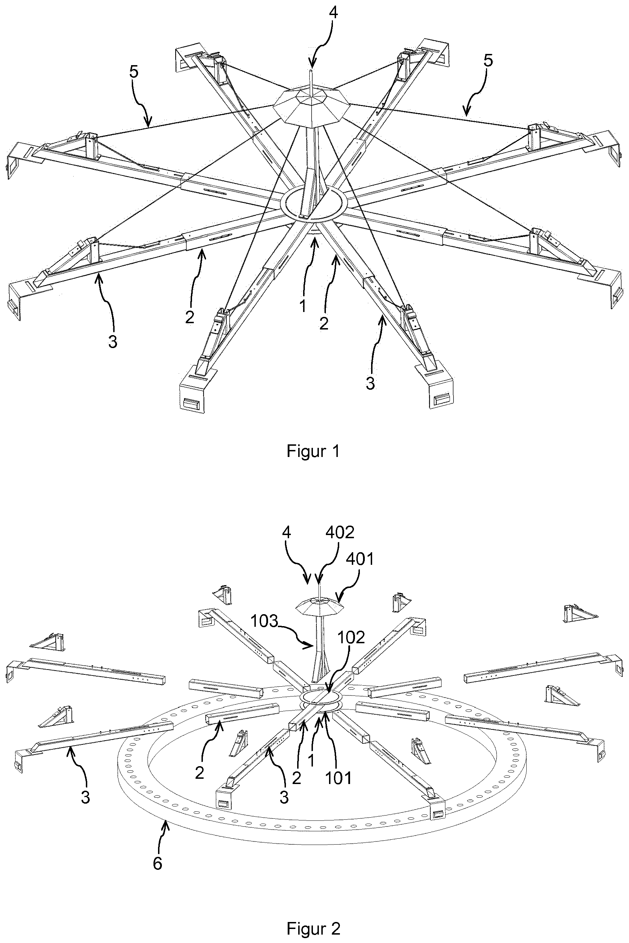

In Figur 1 wird das Untergerüst des Schutzdaches gezeigt, welches sich hauptsächlich aus einem Mittelteil 1 und mehreren, beispielsweise acht Verbindungsstücken 2, welche radial über den Umfang des Mittelteils 1 gleichmäßig verteilt angeordnet sind, sowie einer entsprechenden Anzahl von Befestigungskrallen 3 zusammensetzt. Darüber hinaus ist auf dem Mittelteil 1 eine Blitzfangeinrichtung 4 angebracht. Die Befestigungskrallen 3 sind mit dem Mittelteil in seinem oberen Bereich jeweils mit einem Abspannseil 5 verbunden.

In Figur 2 werden in einer Explosionszeichnung die einzelnen Teile des Untergerüstes mit einem schematisch dargestelltem Turmflansch 6 gezeigt, welcher bei jeder Turmsektion an den oberen und unteren Enden vorgesehen ist.

Das Mittelteil 1 besteht aus zwei Platten, einer unteren 101 und einer oberen Platte 102, welche in dem gezeigten Ausführungsbeispiel kreisförmig sind, übereinander liegen und gleich groß sind, sowie einer vertikalen Stütze 103. Die Platten 101 und 102 sind in einem Abstand miteinander verbunden in der Art, dass zwischen ihnen die Verbindungsstücke 2 platziert und schwenkbar befestigt werden können. Die Verbindungsstücke 2 sind innen hohl und haben einen eckigen oder runden Querschnitt. In dem Ausführungsbeispiel wird ein viereckiger Querschnitt gezeigt, welcher besonders vorteilhaft ist. In oder auf den Verbindungsstücken 2 werden Befestigungskrallen 3 verschiebbar gelagert, wodurch die Größe des Untergerüstes entsprechend dem Durchmesser des Turmflansches variiert werden kann. Die Befestigungskrallen 3 haben einen zu den Verbindungsstücken 2 passenden Querschnitt und bilden im Zusammenspiel mit den Verbindungsstücken 2 das Untergerüst für das Schutzdach.

Die vertikale Stütze 103 steht senkrecht auf der oberen Platte 102 und ist fest mit dieser verbunden.

Durch die integrierte Blitzfangeinrichtung 4 ist es möglich, dass eine Teilinbetriebnahme von elektrischen Einrichtungen in dem Turm, beispielsweise eines Transformators, einer Schaltanlage und eines Umrichters der Windenergieanlage vorgenommen werden kann. Die Blitzfangeinrichtung 4 besteht aus einer schirmförmigen Abdeckplatte 401 und einer Blitzfangstange 402. Auf dem oberen Ende der vertikalen Stütze 103 ist mittig die schirmförmige Abdeckplatte 401 angeordnet, auf welcher wiederum mittig die Blitzfangstange 402 positioniert ist. Die Blitzfangeinrichtung 4 wird durch nicht dargestellte Erdungskabel mit einem oder mehreren Erdungspunkten an dem Turm elektrisch leitend verbunden.

In einer Ausführungsform wird das aus Aluminium bestehende Untergerüst selbst zur elektrisch leitenden Verbindung benutzt, wobei die Verbindungsstellen zwischen dem Mittelteil 1, den Verbindungsstücken 2 und den Befestigungskrallen 3 jeweils durch kurze Erdungskabel elektrisch leitend überbrückt werden, so dass ein Blitzschlag sicher abgeleitet werden kann.

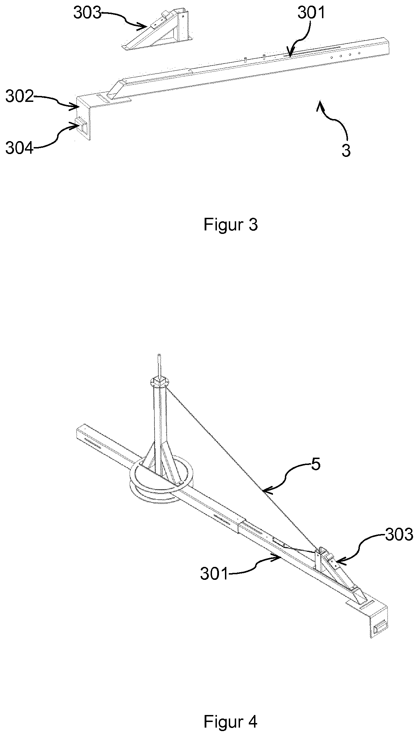

In einem Ausschnitt von Figur 2 zeigt die Figur 3 den Aufbau einer Befestigungskralle 3. Diese besteht in dem gezeigten Ausführungsbeispiel aus einem Krallengrundkörper 301 in Form eines viereckigen Hohlprofils, welcher in seinen Abmessungen dem Verbindungsstück 2 angepasst ist, so dass der Krallengrundkörper 301 in das Verbindungsstück 2 eingeschoben werden kann. An seinem distalen Ende ist der Krallengrundkörper 301 fest mit einer Kralle 302 verbunden, welche am Außendurchmesser über dem Turmflansch 6 positioniert wird. Die Länge der Befestigungskrallen 3 richtet sich nach dem abzudeckenden Durchmesser des Turmes und entspricht höchstens dem Radius des Turms abzüglich des Radius des Mittelteils 1 bzw. der scheibenförmigen Platten 101 und 102. Auf der oberen Seite des Krallengrundkörpers 301 und an seinem distalen Ende ist ein Abspannprofil 303 befestigt. An diesem Abspannprofil 303 wird das Abspannseil 5 befestigt, welches unterhalb der schirmförmigen Abdeckplatte 401 mit der vertikalen Stütze 103 des Mittelteils 1 verbunden ist.

Figur 4 zeigt schematisch die Abspannung einer Befestigungskralle 3. Das Abspannseil 5 wird durch das Abspannprofil 303 geführt und auf dem Krallengrundkörper 301 befestigt. Das Abspannprofil 303 ist mit Mitteln versehen, welche ein Spannen des Abspannseils 5 ermöglichen.

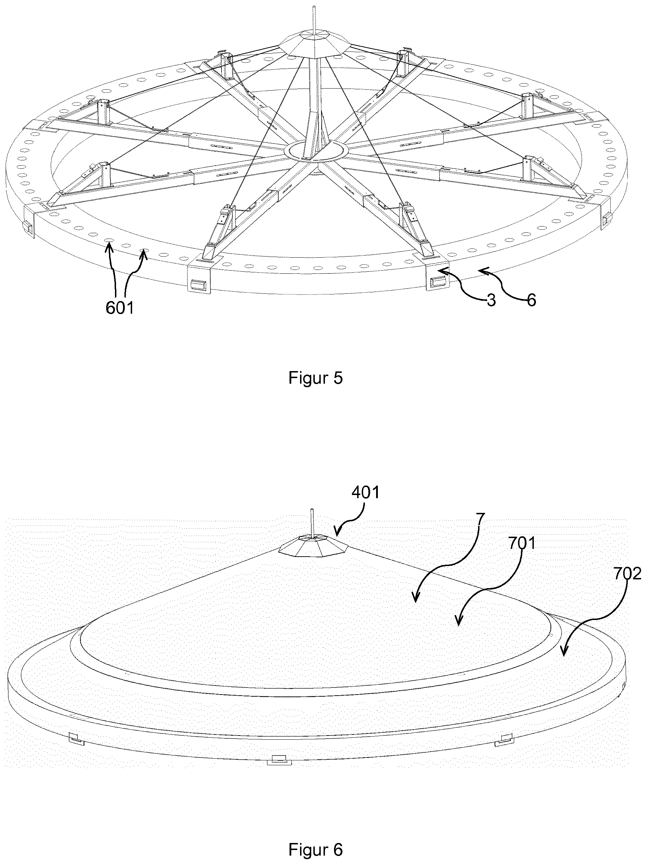

Die Befestigung des gesamten erfindungsgemäßen Schutzdaches auf dem Turmflansch 6 wird in Figur 5 dargestellt. In dem Turmflansch 6 sind, gleichmäßig voneinander beabstandet, Bohrlöcher 601 eingebracht. Bei der Errichtung einer Windenergieanlage werden die einzelnen Turmsektionen an diesen Turmflanschen 6 zusammengefügt und fest verbunden.

Zum Anbringen des Schutzdaches werden in einige Bohrlöcher 601 jeweils Schrauben oder Zentrierdorne eingebracht, welche beim Herablassen des Schutzdaches auf den Turmflansch 6 zur Justierung, Ausrichtung und Fixierung dienen. Durch weitere Schrauben in den Bohrlöchern 601 werden auch die restlichen Befestigungskrallen 3 befestigt. Dadurch wird mehr Sicherheit erreicht. Vor allem bei längeren Bauunterbrechungen in den Wintermonaten kann dies von Vorteil sein.

Durch eine schwenkbare Befestigung der Verbindungsstücke 2 zwischen den Platten 101 und 102 können die Befestigungskrallen 3 auf einfache Weise an unterschiedliche Zahlen von Bohrlöchern 601 in dem Turmflansch 6 angepasst werden.

In Figur 6 wird das vollständige Schutzdach mit textiler Abdeckung 7 dargestellt. Die textile Abdeckung weist eine Imprägnierung auf, beispielsweise können Schutzplanen ähnlich LKW-Planen verwendet werden.

Der Aufbau des Schutzdaches kann am Boden erfolgen. Die textile Abdeckung 7 hat einen kegelförmigen Zuschnitt und wird auf die Abspannseile 5 gelegt und mittig unterhalb der schirmförmigen Abdeckplatte 401 befestigt, wobei der größte Teil der textilen Abdeckung 7 nach oben hin aufgerollt ist. Danach wird die gesamte Konstruktion auf die Turmsektion gesetzt und durch Befestigen der Schrauben in den Bohrlöchern 601 gesichert. Die textile Abdeckung 7 wird entrollt und ebenfalls gesichert. Dies kann beispielsweise in einer üblichen, vom LKW bekannten Art und Weise erfolgen. Dazu sind die Krallen 302 der Befestigungskrallen 3 mit Haken 304 versehen, in welche ein umlaufendes Seil der textilen Abdeckung 7 eingelegt wird.

Bei dem in Figur 6 gezeigten Ausführungsbeispiel besteht die textile Abdeckung 7 aus zwei Teilen 701, 702 in der Art, dass der obere, an der schirmförmigen Abdeckplatte 401 befestigte Teil 701 etwa den halben Durchmesser der durch die Abspannseile 5 überspannten Fläche bedeckt. Eine zweiter, in Form eines Ringes ausgestalteter Teil 702 der textilen Abdeckung wird unter dem oberen Teil 701 der Abdeckung befestigt und ist somit variabel entsprechend dem Durchmesser der abzudeckenden Turmsektion.

## Patentansprüche

1. Schutzdach für einen Turm mit einem kreisförmigen oder vieleckigen Querschnitt, bestehend aus einer Abdeckung (7) und einem Untergerüst mit einem Mittelteil (1) und mehrere an dem Mittelteil (1) radial angeordnete Verbindungsstücke (2), **dadurch gekennzeichnet, dass**
die Abdeckung (7) eine textile Abdeckung (7) ist,
und durch in oder auf den Verbindungsstücken (2) verschiebbar gelagerte Befestigungskrallen (3),
wobei die Befestigungskrallen (3) distal jeweils durch ein Abspannseil (5) mit einer auf dem Mittelteil (1) befindlichen vertikalen Stütze (103) verbunden sind und die textile Abdeckung (7) über die Abspannseile (5) gespannt wird.

2. Schutzdach nach Anspruch 1, **dadurch gekennzeichnet, dass** das Mittelteil (1) eine untere und eine obere Platte (101, 102) aufweist, welche in einem Abstand miteinander verbunden sind, und dass zwischen den Platten (101, 102) die Verbindungsstücke (2) platziert und befestigt werden.

3. Schutzdach nach Anspruch 2 **dadurch gekennzeichnet, dass** die Verbindungsstücke (2) schwenkbar zwischen den Platten (101, 102) befestigt werden.

4. Schutzdach nach einem der Ansprüche 1 bis 3, **dadurch gekennzeichnet, dass** sich auf der senkrechten Stütze (103) eine Blitzschutzeinrichtung (4) befindet,
die eine schirmförmige Abdeckplatte (401) und eine Blitzfangstange (402) aufweist.

5. Schutzdach nach Anspruch 4, **dadurch gekennzeichnet, dass**
die textile Abdeckung (7) mittig unter der schirmförmigen Abdeckplatte (401) befestigt ist.

6. Schutzdach nach einem der Ansprüche 1 bis 5, **dadurch gekennzeichnet, dass**
die Befestigungskrallen (3) jeweils einen Krallengrundkörper (301) aufweisen, an dessen distalem Ende eine nach unten gerichtete Kralle (302) und auf dessen oberer Seite ein Abspannprofil (303) angeordnet sind.

7. Schutzdach einem der Ansprüche 1 bis 6, **dadurch gekennzeichnet, dass**
die Länge der Befestigungskrallen (3) sich nach dem abzudeckenden Durchmesser des Turmes richtet und höchstens dem Radius des Turms abzüglich des Radius des Mittelteils (1) entspricht.

8. Schutzdach einem der Ansprüche 6 bis 7, **dadurch gekennzeichnet, dass**
die Krallen (302) der Befestigungskrallen (3) mit Haken (304) versehen sind, in welche ein umlaufendes Seil der textilen Abdeckung (7) eingelegt wird.

9. Schutzdach nach einem der Ansprüche 1 bis 8, **dadurch gekennzeichnet, dass**
die textile Abdeckung (7) einen kegelförmigen Zuschnitt hat.

10. Schutzdach nach einem der Ansprüche 1 bis 9, **dadurch gekennzeichnet, dass**
die textile Abdeckung (7) zweiteilig ist in der Art, dass ein oberer Teil (701) einen kegelförmigen Zuschnitt hat und ein unterer Teil (702) ringförmig ist und einen kegelstumpfförmigen Zuschnitt hat und der obere Teil den unteren Teil überlappt.

## Claims

1. Protective roof for a tower having a circular or polygonal cross section, comprising a cover (7) and a subframe having a centre part (1) and a plurality of connecting pieces (2) arranged radially on the centre part (1), **characterized in that** the cover (7) is a textile cover (7), and by fastening claws (3) displaceably mounted in or on the connecting pieces (2), wherein the fastening claws (3) are each distally connected to a vertical support (103) situated on the centre part (1) by means of a bracing cable (5) and the textile cover (7) is stretched over the bracing cables (5).

2. Protective roof according to Claim 1, **characterized in that** the centre part (1) has a lower and an upper plate (101, 102) which are connected to one another at a distance, and **in that** the connecting pieces (2) are placed and fastened between the plates (101, 102).

3. Protective roof according to Claim 2, **characterized in that** the connecting pieces (2) are pivotably fastened between the plates (101, 102).

4. Protective roof according to one of Claims 1 to 3, **characterized in that** a lightning protection device (4) is situated on the vertical support (103) and has a shield-like cover plate (401) and a lightning rod (402).

5. Protective roof according to Claim 4, **characterized in that** the textile cover (7) is fastened centrally below the shield-like cover plate (401).

6. Protective roof according to one of Claims 1 to 5, **characterized in that** the fastening claws (3) each have a claw basic body (301) with a downwardly directed claw (302) arranged at its distal end and a bracing profile (303) arranged on its upper side.

7. Protective roof according to one of Claims 1 to 6, **characterized in that** the length of the fastening claws (3) depends on the diameter of the tower to be covered and corresponds at most to the radius of the tower less the radius of the centre part (1).

8. Protective roof according to either of Claims 6 and 7, **characterized in that** the claws (302) of the fastening claws (3) are provided with hooks (304) in which a peripheral cable of the textile cover (7) is inserted.

9. Protective roof according to one of Claims 1 to 8, **characterized in that** the textile cover (7) has a conical design.

10. Protective roof according to one of Claims 1 to 9, **characterized in that** the textile cover (7) is in two parts such that an upper part (701) has a conical design and a lower part (702) is annular and has a frustoconical design and the upper part overlaps the lower part.

## Revendications

1. Toit de protection variable pour une tour, comprenant une section transversale circulaire ou polygonale, constitué d'un recouvrement (7) et d'une sous-structure avec une partie centrale (1) et plusieurs pièces de raccordement (2) disposées radialement au niveau de la partie centrale (1), **caractérisé en ce que** le recouvrement (7) est un recouvrement textile (7) et par des griffes de fixation (3) supportées de manière déplaçable dans ou sur les pièces de raccordement (2), les griffes de fixation (3) étant connectées distalement à chaque fois par un câble de tensionnement (5) avec un appui vertical (103) se trouvant sur la partie centrale (1) et le recouvrement textile (7) étant tendu par les câbles de tensionnement (5).

2. Toit de protection selon la revendication 1, **caractérisé en ce que** la partie centrale (1) présente une plaque inférieure et une plaque supérieure (101, 102) qui sont connectées à distance l'une de l'autre et **en ce qu'**entre les plaques (101, 102) sont placées et fixées les pièces de raccordement (2).

3. Toit de protection selon la revendication 2, **caractérisé en ce que** les pièces de raccordement (2) sont fixées de manière pivotante entre les plaques (101, 102).

4. Toit de protection selon l'une quelconque des revendications 1 à 3, **caractérisé en ce que** sur l'appui vertical (103) se trouve un dispositif de protection contre la foudre (4) qui présente une plaque de recouvrement en forme de parapluie (401) et un paratonnerre (402).

5. Toit de protection selon la revendication 4, **caractérisé en ce que** le recouvrement textile (7) est fixé centralement sous la plaque de recouvrement en forme de parapluie (401).

6. Toit de protection selon l'une quelconque des revendications 1 à 5, **caractérisé en ce que** les griffes de fixation (3) présentent à chaque fois un corps de base de griffe (301) au niveau de l'extrémité distale duquel est disposée une griffe orientée vers le bas (302) et au niveau du côté supérieur duquel est disposé un profil de tensionnement (303).

7. Toit de protection selon l'une quelconque des revendications 1 à 6, **caractérisé en ce que** la longueur des griffes de fixation (3) se conforme au diamètre de la tour à couvrir et correspond au maximum au rayon de la tour moins le rayon de la partie centrale (1).

8. Toit de protection selon l'une quelconque des revendications 6 à 7, **caractérisé en ce que** les griffes (302) des griffes de fixation (3) sont pourvues de crochets (304) dans lesquels est introduit un câble périphérique du recouvrement textile (7).

9. Toit de protection selon l'une quelconque des revendications 1 à 8, **caractérisé en ce que** le recouvrement textile (7) présente une pièce découpée de forme conique.

10. Toit de protection selon l'une quelconque des revendications 1 à 9, **caractérisé en ce que** le recouvrement textile (7) est en deux parties de telle sorte qu'une partie supérieure (701) présente une pièce découpée de forme conique et une pièce inférieure (702) a une forme annulaire et présente une pièce découpée de forme tronconique et la partie supérieure chevauche la partie inférieure.
